# EUROPEAN PATENT APPLICATION

(11) **EP 4 664 697 A1**
(43) Date of publication of application: **17.12.2025**
(21) Application number: 25178972.3
(22) Date of filing: 27.05.2025
(51) Int. Cl.: H02G 1/02

(54) **HELICOPTER LIFTED WORK PLATFORM FOR WORK ON A TOP LINE IN A HIGH-VOLTAGE MAST AND METHOD FOR MOUNTING**

(30) Priority: 13.06.2024 NO 20240626
(71) Applicant: OPP Kraftledningstjenester AS, 4642 Søgne (NO)
(72) Inventor: Aurebekk, Anders Rune, 4645 Nodeland (NO)
(74) Representative: Acapo Onsagers AS

(57) **Abstract**

A helicopter-lifted work platform (1) for replacing a top line (2) in a live high-voltage mast (3) with a horizontal traverse (16) is described. The work platform (1) comprises a mounting box (5) comprising fastening means (6) for fastening the mounting box (5) to the traverse (16) of a high-voltage mast (3) and a walkway (7) which is attached to the mounting box and which in its collapsed state lies above the mounting box (5) and which in its unfolded state extends perpendicularly outwards from a centerline ML of the mounting box (5) in opposite horizontal directions. The work platform further comprises a cable hook (8) attached to the respective outer ends of the walkway (7) for hooking onto the top line so that the walkway (7) is supported at its outer ends and at least three lifting units (15) attached to the mounting box (5) which are accessible for helicopter lifting when the walkway (7) is in its folded states.

## Description

### Field of the invention

The invention is related to maintenance/replacement of power lines suspended from masts. More specifically, the invention relates to a work platform for replacement of or measures on grounding cables/top lines with underlying high-voltage phase cables that are disconnected or live.

### Background

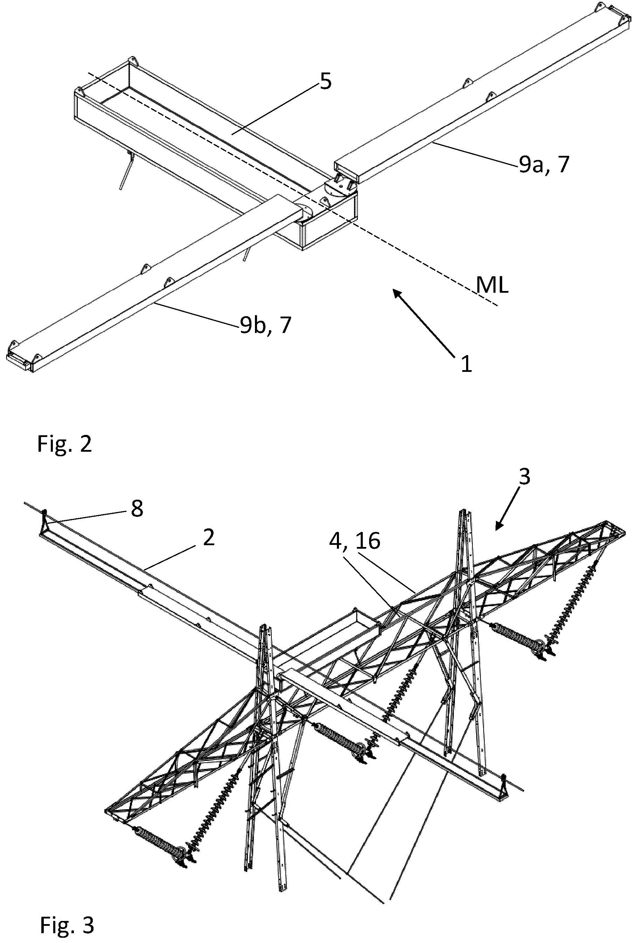

In Norway, there are approximately 12,000 kilometers of high-voltage power lines for power transmission at 300kV and 420 kV and approximately 30,000 high-voltage masts. Most of the masts are of the type that can be seen in Fig. 3. The masts comprise two towers and a traverse. The traverse typically comprises two upper beams or girders that form a surface at the top of the traverse. The cables attached to these masts will typically be three live lines and two top lines, which function as grounding conductors and lightning conductors at the top of each of the towers.

As society has become more digitalized, millions of kilometers of fiber cables have been laid in the country. A significant part of the high-capacity lines in the fiber network are twisted around the ground cables on top of the high-voltage towers. To reduce the vulnerability of this important infrastructure, there are plans to replace all the overhead lines (also called grounding cables) on the tops of the high-voltage towers with an overhead line that contains fiber cables in the core. Such a cable is often called OPGW cable (OPtical Ground Wire).

One problem with changing from traditional grounding cable to OPGW cable or performing work on the grounding cables is that the power in the high-voltage cables must be turned off. The reason is that it is too risky for operators to work in the tower with the power on. The risk of losing tools, wires and objects on the high-voltage cables is too great. The costs of turning off the power in the high-voltage towers are enormous for society and there is a need for a method to change the overhead lines while the power in the high-voltage cables is on.

Replacing grounding cables/toplines is done by placing a section of existing cables onto pulleys. All mounted equipment in the span, such as damper loops, flight markers, etc., is removed. The old topline is then connected to a winch and a brake, and the existing and new cable are spliced together, before the winch and brake pull the existing cable tightly through the pulleys, until the spliced new topline is at the winch. The new cable is then tensioned, anchored to the masts, and damper loops and any other equipment are mounted. This work requires a lot of manual assembly operations outside the topline. The work tasks include bending (attaching wires to insulators), crouching, block laying and assembly and disassembly of loops and damping loops.

The aforementioned tasks are very stressful for the operators if a platform from which it is possible to work is not provided. An object of the invention is to ensure HSE related to working in high-voltage masts.

In new installations, a dragline is pulled out via the pulleys, before this is used to pull out the top line. Then the work operations follow as in the operations for replacing the top line.

More specifically, there is a need for a work platform or work platform that generally streamlines and contributes to safer assembly work during work on top lines, and in particular improves safety when working on top lines above live high-voltage lines.

### Brief summary of the invention

In a first aspect of the invention, a helicopter-lifted work platform is described for replacing a top line in a high-voltage mast with a horizontal traverse where the power can be disconnected or connected. The top line will in most cases be an grounding cable, but it is conceivable that it can also be other types of cables. The work platform comprises a mounting box comprising fastening means for fastening the mounting box to the traverse of a high-voltage mast. Preferably, the mounting box is fastened to two upper girders which together form a horizontal base on which the mounting box rests while two operators fasten the mounting box. The work platform further comprises a walkway which is fastened to the mounting box and which in its folded state lies above the mounting box and which in its unfolded state extends perpendicularly outwards from a centerline ML of the mounting box in opposite horizontal directions. The work platform further comprises a cable hook fastened to the respective outer ends of the walkway for being hooked onto the top line so that the walkway is supported at its outer ends and is essentially positioned below the top line. The work platform also comprises at least three lifting units fastened to the mounting box which are accessible for helicopter lifting when the walkway is in its folded state.

The mounting box may comprise walkway stoppers to prevent the walkway from leaving its folded state in an uncontrolled manner. The walkway stoppers may comprise an arm projecting upwards from the mounting box on respective sides of the mounting box and blocking an unwanted slippage of the walkway.

The walkway may comprise two walkway parts each rotatably mounted, preferably on opposite sides of the centerline ML, at one end of the mounting box by means of a rotation device wherein the walkway sections are also hingedly mounted with a hinge device such that a helicopter can grip the cable hook to hook the cable hook on to the top line.

The walkway sections may comprise a telescopic walkway extension that can be pulled out of the respective walkway sections and wherein the cable hook is attached to an outer end of the walkway extension.

The cable hook may comprise a roller configured to roll on the top line.

The cable hook may comprise an upper and lower guide track that guides the top line towards the roller to facilitate hooking of the cable hook on to the top line by means of a helicopter.

A work platform according to any one of the preceding claims, wherein the attachment means comprises at least two straps for attachment to the traverse.

In a second aspect of the invention, a method for attaching a work platform with two walkway sections as described above is described. The method comprises the steps of:
a. to attach the lifting units to a lifting line attached to the helicopter,
b. to lift the work platform onto the traverse of the high-voltage mast where two operators attach the work platform to the traverse using the fastening means,
c. to attach the helicopter's lifting line to the outer end of one of the walkway parts. Preferably, the lifting line is attached to the walkway lifting eye 19 mounted on the cable hook
d. to lift one of the walkway parts with the helicopter and hook the cable hook on the top line,
e. to attach the helicopter's lifting line to the outer end of the other of the walkway parts,
f. to lift the other of the walkway parts with the helicopter and hook the cable hook on the top line.

Points d and f may further comprise pulling out the respective telescopic walkway extensions if any.

In a third aspect, a method is described for taking down the work platform comprising two rotation device walkway parts, where the work platforms are attached as described above. The method comprises the steps of:
a. attaching the helicopter's lifting line to the outer end of one of the walkway parts 9a. Preferably, the lifting line is attached to the walkway lifting eye 19 mounted on the cable hook. b. to unhook the cable hook 8 of one of the walkway parts 9a from the top line with the helicopter and to swing the walkway half back over the mounting box,
c. to attach the helicopter's lifting line to the outer end of the other of the walkway parts 9b,
d. to lift the other of the walkway parts 9b with the helicopter and to unhook the cable hook 8 from the top line 2 and to swing the walkway half back over the mounting box.
e. to attach the lifting units 15 to a lifting line attached to the helicopter,
f. to lift the work platform 1 up from the upper girders where two operators have detached the work platform from the traverse 16 by loosening the fastening means 6.

### Brief description of the figures

To improve the understanding of the invention, some figures are attached where the same feature has the same reference in the different figures.
Fig. 1 shows an embodiment of the work platform hanging below a helicopter.
Fig. 2 shows an embodiment of the work platform with a folded walkway.
Fig. 3 shows an embodiment of the work platform mounted in the mast where the cable hook is hooked onto the top line.
Fig. 4 shows the work platform in a folded state where the rotation device and hinge device are visible.
Fig. 5 shows an embodiment of the work platform in a folded state where the walkway comprises walkway extensions.
Fig. 6 shows an embodiment of the cable hook in more detail.

### Detailed description

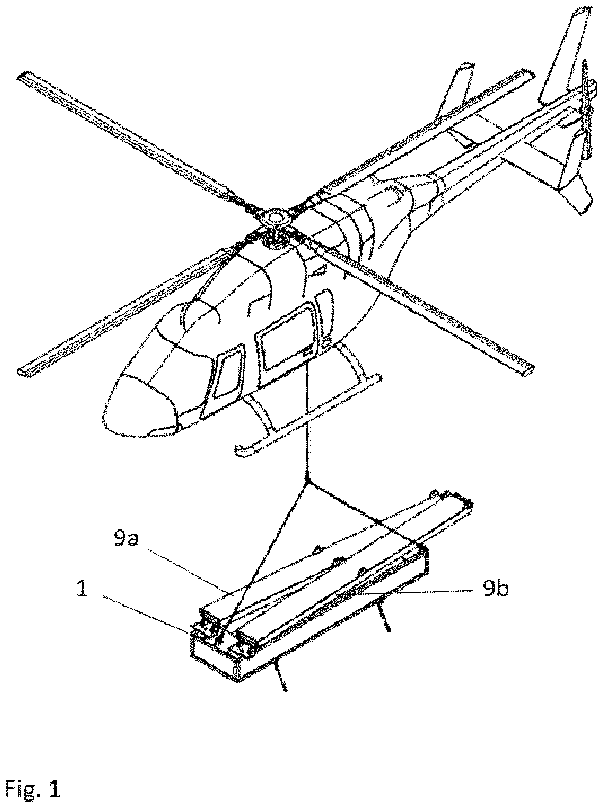

A helicopter-liftable work platform 1 is described as shown in Fig. 1. The work platform is used for replacing a top line 2 in a live high-voltage mast 3. By high voltage is meant 300 kV - 400 kV. Preferably, the high-voltage mast comprises a horizontal traverse 16 positioned above the live cables. The traverse preferably comprises a double upper girder 4 so that the work platform can rest on the upper girders 4 of the traverse 16 without having to be balanced by an operator during the assembly phase. Primarily, it is the replacement of the top line at the top of the mast for which the work platform is designed. However, the work platform can also be used in other places.

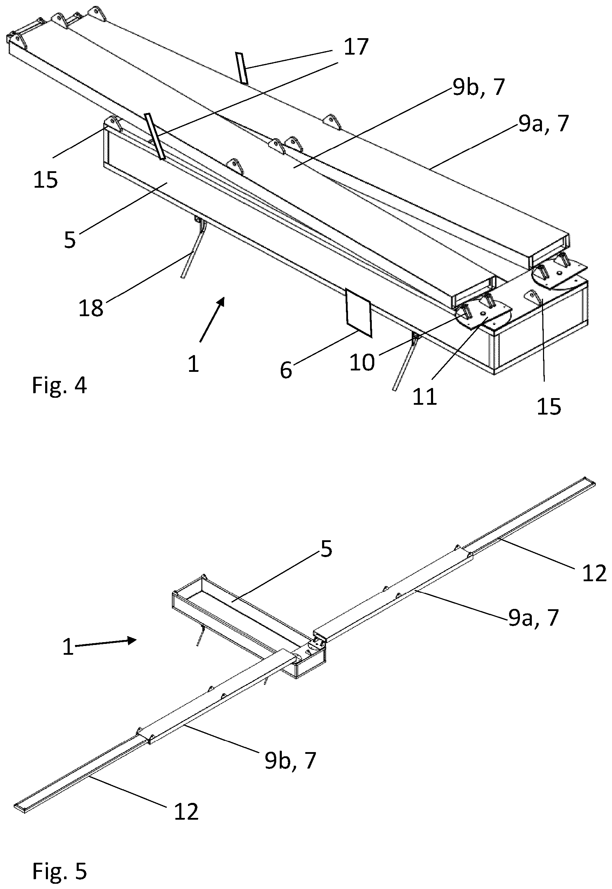

Fig. 2 and 4 show the helicopter-lifted work platform 1 comprising an assembly box 5 comprising fastening means 6 for fastening the assembly box 5 to the traverse 16 of a high-voltage mast 3. The fastening means 6 are only indicated as a square in Fig. 4, but may comprise straps which are fastened around the traverse 16 or fastened to a truss in the traverse. Alternatively, the fastening means may comprise at least one fastening rod which is bolted between the mounting box 5 and the traverse on respective opposite sides of the mounting box 5. The mounting box 5 may be used to bring tools and spare parts to the operators working in the high-voltage mast.

On the mounting box 5 at one end of the mounting box there is positioned a walkway 7 which in its folded state lies above the mounting box 5 and which in its unfolded state extends perpendicularly outwards from a center line ML of the mounting box 5 in opposite horizontal directions, as illustrated e.g. in Fig. 2. The mounting box thus rests on the traverse, preferably on the two aforementioned upper girders 4, while the walkway 7 extends below the top line in the longitudinal direction as shown in Fig. 3. A cable hook 8 is attached to the respective outer ends of the walkway 7 to be hooked onto the top line 2 so that the walkway 7 is supported at its outer ends.

The mounting box preferably comprises at least three lifting units 15 attached to the mounting box 5 as indicated in Fig. 4, where the lifting units 15 are accessible for helicopter lifting when the walkway 7 is in its folded state. The lifting units will typically comprise lifting eyes 15 as shown in the figure or for example U-shaped brackets welded to the sides of the mounting box 5.

As indicated in Fig. 4, the mounting box 5 may include walkway stoppers 17 to prevent the walkway 7 from uncontrolled leaving its folded state. Since the work platform is to be flown close to live high-voltage cables, it is very important that the walkway 7 does not swing out uncontrolled.

In one embodiment, shown in Fig. 4 and Fig. 5, the walkway 7 comprises two walkway parts 9a and 9b, each of which is rotatably mounted on either side of the center line ML at one end of the mounting box 5 by means of a rotation device 11. Preferably, the walkway parts 9a and 9b are also hingedly mounted by means of a hinge device 10 so that a helicopter can grab the cable hook 8 and lift it up slightly to hook the cable hook 8 onto the top line 2. It is also conceivable that the walkway 7, for example, comprises one walkway part which can be rotated out to one side and which comprises a telescopic walkway extension 12 which can be pulled out to the other opposite side (not shown).

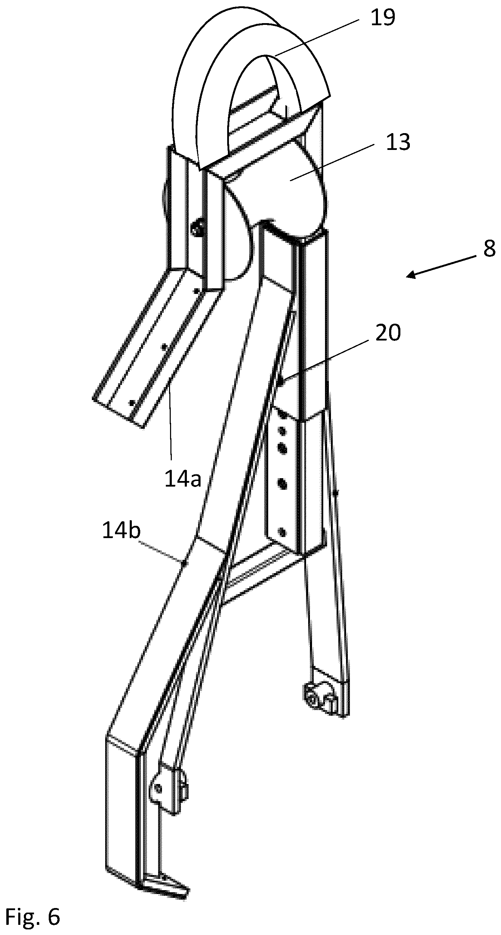

In an embodiment shown in FIG. 5, each of the walkway parts 9a and 9b comprises a telescopic walkway extension 12 which can be pulled out of the respective walkway parts 9a and 9b and where the cable hook 8 is attached to an outer end of the walkway extension 12. Fig. 6 shows an embodiment of the cable hook 8 which comprises a roller 13 which is configured to roll on the top line 2 so that no unnecessary friction and wear occurs when the top line is stretched or slackened or if the walkway extension 12 is pulled out of or pushed into the walkway 7 or the walkway parts 9a, 9b. Preferably, the cable hook has a height adjustment 20 as shown in Fig. 6 so that it is possible to adjust for different height differences between the traverse 16 (on which the mounting box is attached) and the top line 2 and different angles between the top line 2 and the horizontal plane, which is preferably the plane in which the walkway 7 is located. In some places, however, it will be natural to deviate from the horizontal plane.

As shown in Fig. 6, the cable hook 8 comprises an upper and lower guide track 14a and 14b which guides the top line 2 towards the roller 13 to facilitate hooking of the cable hook 8 onto the top line 2 by means of a helicopter. Preferably, the cable hook also comprises a lifting eye 19 positioned at the top of the cable hook 8 to which the helicopter's lifting line can be attached by means of a hook. By using the lifting eye 19, the operator reduces the possibility of lifting equipment such as slings and ropes extending downwards under the work platform and thereby increasing the risk of overturning, especially in wet weather.

A method is also described for attaching the work platform 1 to a high-voltage mast 3. The method requires two operators in the high-voltage mast and a helicopter with a pilot and an operator and comprises the steps of:
a. attaching the lifting units 15 to a lifting line attached to the helicopter,
b. lift the work platform 1 onto the traverse 16, preferably placing the mounting box 5 on the upper belts 4, where two operators attach the work platform to the traverse 16 using the fastening means 6 and then release the lifting line,
c. attaching the helicopter's lifting line to the outer end of one of the walkway parts 9a, preferably to the lifting eye of the cable,
d. lifting one of the walkway parts 9a with the helicopter and hook the cable hook 8 onto the top line and then release the lifting line,
e. attaching the helicopter's lifting line to the outer end of the other of the walkway parts 9b,
f. lifting the other of the walkway parts 9b with the helicopter and hook the cable hook 8 onto the top line 2 and then release the lifting line.

If the walkway parts 9a and 9b comprise a walkway extension 12, points d and f may further comprise extending the respective telescopic walkway extensions 12.

A method for taking down the work platform 1 when work is completed is also described. The method comprises the steps of:
a. attaching the helicopter's lifting line to the outer end of one of the walkway parts 9a, e.g. in the cable hook 8. b. unhook the cable hook 8 of one of the walkway parts 9a, 9b from the top line with the helicopter and push the walkway extension 12 into the walkway parts 9a, 9b if the walkway extension 12 has been pulled out, and swing the walkway part back over the mounting box 5,
c. attaching the helicopter's lifting line to the outer end of the other of the walkway parts 9a, 9b,
d. lifting the other of the walkway parts 9b with the helicopter and unhook the cable hook 8 from the top line 2 and swing the walkway part back over the mounting box.
e. attaching the lifting units 15 to the lifting line attached to the helicopter,
f. lifting the work platform 1 up from the upper girder where two operators have detached the work platform from the traverse 16 by loosening the fastening means 6.

### Reference numbers

1 Work platform
2 Topline
3 High-voltage mast
4 Upper girders
5 Mounting box
6 Fastening means
7 Walkway
8 Cable hook
9a and 9b Walkway parts
10 Hinge device
11 Rotation device
12 Walkway extension
13 Roller
14a and 14b Upper and lower guideway
15 Lifting units/lifting eye
16 Traverse
17 Walkway stopper
18 Guide arms
19 Cable hook lifting eye
20 Height adjustment mechanism

## Claims

1. Helicopter lifted work platform (1) for replacing or working on a top line (2) in a high-voltage mast (3) with a horizontal traverse (16), the work platform 1 comprising:
a mounting box (5) comprising fastening means (6) for fastening the mounting box (5) to the traverse (16) of the high-voltage mast (3),
wherein a walkway (7) which is attached to the mounting box and which in its folded state lies above the mounting box (5) and which in its unfolded state extends substantially perpendicularly outwards from a centerline ML of the mounting box (5) in opposite horizontal directions,
a cable hook (8) attached to the respective outer ends of the walkway (7) for hooking onto the top line (2) so that the walkway (7) is supported at its outer ends, and
at least three lifting units (15) attached to the mounting box (5) which are accessible for helicopter lifting when the walkway (7) is in its folded state.

2. A work platform according to claim 1, wherein the assembly box (5) comprises walkway stoppers (17) to prevent the walkway (7) from leaving its folded state in an uncontrolled manner.

3. A work platform according to claim 1, wherein the assembly box (5) comprises downwardly inclined guide arms (18) on each side to guide the work platform to the correct position on the traverse (16) during mounting.

4. A work platform according to any one of the preceding claims, wherein the walkway (7) comprises two walkway parts (9a and 9b) each rotatably mounted at one end of the assembly box (5) by means of a rotation device (11), the walkway parts (9a and 9b) also being hingedly mounted with a hinge device (10) so that a helicopter can grip the cable hook (8) to hook the cable hook (8) onto the top line (2).

5. A work platform according to claim 3, wherein the walkway parts (9a and 9b) comprise a telescopic walkway extension (12) which can be pulled out of the respective walkway parts (9a and 9b) and wherein the cable hook (8) is attached to an outer end of the walkway extension (12).

6. A work platform according to any one of the preceding claims, wherein the cable hook (8) comprises a roller (13) which is configured to roll on the top line (2).

7. A work platform according to any one of the preceding claims, wherein the cable hook (8) comprises an upper and lower guide track (14a and 14b) which guides the top line (2) towards the roller (13) to facilitate hooking of the cable hook (8) onto the top line (2) by means of a helicopter.

8. A work platform according to any one of the preceding claims, wherein the fastening means (6) comprise at least two straps for fastening to the traverse (16).

9. A method for fastening a work platform according to claims 3-7 comprising the steps of:
a. fastening the lifting units (15) to a lifting line attached to the helicopter,
b. lifting the work platform 1 onto the upper girder where two operators fasten the work platform to the traverse (16) by means of the fastening means (6),
c. fastening the helicopter's lifting line to the outer end of one of the walkway parts (9a),
d. lifting one of the walkway parts (9a) with the helicopter and hooking the cable hook (8) on the top line,
e. fastening the helicopter's lifting line to the outer end of the other of the walkway parts (9b),
f. lifting the other of the walkway parts (9b) with the helicopter and hooking the cable hook (8) on the top line (2).

10. A method according to claim 9 when dependent on claim 4 wherein points d and f further comprise pulling out the respective telescopic walkway extensions (12).

11. A method for taking down a work platform according to claims 3-7 which is attached according to claim 9 comprising the steps of:
a. attaching the helicopter lifting line to the outer end of one of the walkway parts (9a)
b. unhooking the cable hook (8) of one of the walkway parts (9a) from the top line with the helicopter and swinging the walkway half back over the mounting box,
c. attaching the helicopter lifting line to the outer end of the other of the walkway parts (9b),
d. lifting the other of the walkway parts (9)b with the helicopter and unhooking the cable hook (8) from the top line (2) and swinging the walkway part (9b) back over the mounting box (5).
e. attaching the lifting units (15) to a lifting line attached to the helicopter,
f. lifting the work platform (1) up from the upper girders (4) where two operators have detached the work platform from the traverse (16) by loosening the fastening means (6).
